# EUROPÄISCHE PATENTSCHRIFT

(11) **EP 2 620 547 B1**
(45) Veröffentlichungstag und Bekanntmachung des Hinweises auf die Patenterteilung: **01.05.2019**
(21) Anmeldenummer: 13000106.8
(22) Anmeldetag: 10.01.2013
(51) Int. Cl.: E01C 19/00, E01C 19/48

(54) **Selbstfahrende Baumaschine und Verfahren zum Steuern einer selbstfahrenden Baumaschine**
Self-propelled construction machine and method for controlling the same
Engin automobile et procédé de commande d'un engin automobile

(30) Priorität: 25.01.2012 DE 102012001289
(43) Veröffentlichungstag der Anmeldung: 31.07.2013
(73) Patentinhaber: Wirtgen GmbH, 53578 Windhagen (DE)
(72) Erfinder: Fritz, Matthias, 53773 Hennef (DE); Dahm, Martin, 57610 Gieleroth (DE); Barimani, Cyrus, Dr., 53639 Königswinter (DE); Hähn, Günter, Dr., 53639 Königswinter (DE)
(74) Vertreter: Oppermann, Frank

(56) Entgegenhaltungen:
- EP-A2- 1 103 659
- EP-A2- 2 336 424
- US-A- 4 041 623
- US-A- 5 988 936

## Beschreibung

Die Erfindung betrifft eine selbstfahrende Baumaschine, insbesondere einen Gleitschalungsfertiger, und ein Verfahren zum Steuern einer selbstfahrenden Baumaschine. Es sind verschiedene Arten von selbstfahrenden Baumaschinen bekannt. Zu diesen Maschinen zählen beispielsweise die bekannten Gleitschalungsfertiger oder Straßenfräsmaschinen. Die selbstfahrenden Baumaschinen zeichnen sich dadurch aus, dass sie über eine an einem Maschinenrahmen angeordnete Arbeitseinheit mit Arbeitsmitteln zur Errichtung von Baukörpern auf einem Gelände oder zum Verändern des Geländes verfügen.

Bei den bekannten Gleitschalungsfertigern umfasst die Arbeitseinheit eine Vorrichtung zum Formen von fließfähigem Material, insbesondere Beton, die nachfolgend auch als Betonmulde bezeichnet wird. Mit der Betonmulde können Baukörper unterschiedlicher Ausbildung, beispielsweise Leitwände oder Verkehrsinseln hergestellt werden. Ein Gleitschalungsfertiger ist beispielsweise in der EP 1 103 659 A2 beschrieben.

Bei der Arbeitseinheit der bekannten Straßenfräsmaschinen handelt es sich um eine Fräseinrichtung, die eine mit Fräswerkzeugen bestückte Fräswalze aufweist, mit der von dem Gelände Material in einer vorgegebenen Arbeitsbreite abgefräst werden kann.

Die bekannten selbstfahrenden Baumaschinen verfügen weiterhin über eine Antriebseinheit mit Antriebsmitteln zum Ausführen von translatorischen und/oder rotatorischen Bewegungen der Baumaschine in dem Gelände sowie eine Steuer- und Recheneinheit zum Steuern der Antriebseinheit derart, dass die Baumaschine auf dem Gelände die translatorischen und/oder rotatorischen Bewegungen ausführt.

Zur Errichtung von Baukörpern auf dem Gelände oder zum Verändern des Geländes wird bei selbstfahrenden Baumaschinen eine weitgehend automatische Steuerung der Baumaschine ohne nennenswerte Eingriffe des Fahrzeugführers angestrebt. Bei der automatischen Steuerung der Baumaschine wird die Antriebseinheit der Baumaschine derart gesteuert, dass sich ein Referenzpunkt auf der Baumaschine ausgehend von einem vorgegebenen Startpunkt, an dem die Baumaschine eine vorgegebene Position und Orientierung im Gelände hat, auf einer vorgegebenen Wegstrecke oder in einem vorgegebenen Abstand, d. h. auf einer Äquidistante entlang der Wegstrecke bewegt, um einen Baukörper zu errichten oder das Gelände zu verändern. Dabei wird die vorgegebene Wegstrecke durch Geraden und/oder Kurven beschrieben.

Ein bekanntes Verfahren zum Steuern selbstfahrender Baumaschinen setzt den Einsatz eines Leitdrahtes voraus, mit dem die Sollwegstrecke oder eine Äquidistante zu der Sollwegstrecke vorgegeben wird. Es ist auch bekannt, selbstfahrende Baumaschinen unter dem Einsatz eines Globalen Navigationssatellitensystem (GNSS) zu steuern. Eine Straßenfräsmaschine, deren Antriebseinheit mit einem Leitdraht gesteuert wird, ist beispielsweise aus der US-A-4,041,623 bekannt. Die US-A-5,988,936 beschreibt einen Gleitschalungsfertiger mit einer Steuerung der Antriebseinheit unter dem Einsatz eines Leitdrahtes. Bei beiden Baumaschinen wird der Abstand zwischen einem Referenzpunkt der Baumaschine und dem Leitdraht mit Tastelementen ermittelt, die den Leitdraht erfassen.

Der aus der US-A-5,988,936 bekannte Gleitschalungsfertiger verfügt über ein in Arbeitsrichtung vorderes Tastelement und ein hinteres Tastelement sowie ein mittleres Tastelement, das zwischen dem vorderen und hinteren Tastelement angeordnet ist. Sämtliche Tastelemente liegen auf einer gemeinsamen Achse, die parallel zur Längsachse des Gleitschalungsfertigers verläuft. Die Tastelemente definieren Referenzpunkte auf der Baumaschine.

Wenn sich der Gleitschalungsfertiger auf einem geraden Abschnitt der Sollwegstrecke bewegt, sind sowohl das in Arbeitsrichtung vordere als auch das hintere Tastelement im Einsatz, so dass die Antriebseinheit in Abhängigkeit sowohl von dem gemessenen Abstand zwischen dem zugehörigen vorderen Referenzpunkt der Baumaschine und dem Leitdraht als auch von dem gemessenen Abstand zwischen dem zugehörigen hinteren Referenzpunkt und dem Leitdraht gesteuert wird. Die Antriebseinheit wird dabei derart gesteuert, dass der Abstand zu dem Leitdraht einem Sollwert entspricht. Diese Steuerung hat sich in der Praxis bewährt.

Bei einer Bewegung des Gleitschalungsfertiger auf einem gekrümmten Abschnitt erfolgt die Steuerung der Antriebseinheit hingegen nur in Abhängigkeit von dem Abstand, der zwischen dem zugehörigen mittleren Referenzpunkt der Baumaschine und dem Leitdraht gemessen wird. Das vordere und hintere Tastelement sind dabei nicht aktiv.

Beim Übergang von einem geraden Abschnitt in einen gekrümmten Abschnitt oder umgekehrt ist daher eine Umschaltung zwischen den einzelnen Tastelementen erforderlich. Bei der Kurveneinfahrt wird von dem vorderen und hinteren Tastelement auf das mittlere Tastelement und bei der Kurvenausfahrt wieder von dem mittleren auf das vordere und hintere Tastelement umgeschaltet. Eine Umschaltung auf verschiedene unterschiedliche Tastelemente erweist sich schon deshalb als nachteilig, weil mit der Umschaltung ein kontinuierlicher Prozess nicht gegeben ist. Nachteilig ist auch, dass bei der Steuerung der Kurvenfahrt mit dem mittleren Tastelement die Position des Tastelements von dem Radius der Kurve abhängig ist.

Wenn der Gleitschalungsfertiger beim Übergang von einem geraden Abschnitt in einen gekrümmten Abschnitt seine Arbeitsrichtung ändern soll, ergeben sich bei der bekannten Steuerung der Antriebseinheit, die bei der Einfahrt in die Kurve eine Umschaltung von dem vorderen und hinteren Tastelement auf das mittlere Tastelement vorsieht, in der Praxis aber Probleme. Dabei ist für die Steuerung insbesondere die Einfahrt in enge Kurven problematisch, beispielsweise bei der Fertigung von Betonbauteilen in Form einer Verkehrsinsel.

Es hat sich auch gezeigt, dass für die Steuerung der Baumaschine insbesondere der Übergang von dem geraden Abschnitt in den gekrümmten Abschnitt der Sollwegstrecke problematisch ist, da die Position der Unstetigkeitsstelle nicht genau bekannt ist. In der Praxis kann der Fahrzeugführer zwar vorgeben, dass die Einfahrt in die Kurve beginnt. Die genaue Position der Unstetigkeitsstelle ist aber für den Fahrzeugführer nur schwer einzuschätzen. Allein mit der Überwachung des Abstandes zwischen dem vorderen Referenzpunkt und dem Leitdraht, der bei der Einfahrt in die Kurve zunimmt, kann die Position der Unstetigkeitsstelle schon deshalb nicht bestimmt werden, weil die Steuerung vorsieht, eine Abweichung zwischen dem Referenzpunkt und dem Leitdraht auszugleichen, d. h. den Abstand bei 0 zu halten. Selbst wenn die Umschaltung exakt zum richtigen Zeitpunkt erfolgen sollte, wird sich in der Praxis ein sprunghafter Lenkbefehl ergeben, da es höchst unwahrscheinlich ist, dass der mittlere Referenzpunkt zum Zeitpunkt der Umschaltung genau denselben Abstand von dem Leitdraht hat, wie der vordere und/oder der hintere Referenzpunkt.

Der Erfindung liegt die Aufgabe zugrunde, die automatische Steuerung einer selbstfahrenden Baumaschine insbesondere dann zu verbessern, wenn sich die Baumaschine von einem im Wesentlichen geraden Abschnitt in einen gekrümmten Abschnitt der vorgegebenen Wegstrecke bewegt.

Die Lösung dieser Aufgabe erfolgt erfindungsgemäß mit den Merkmalen der unabhängigen Patentansprüche. Die abhängigen Ansprüche betreffen vorteilhafte Ausführungsformen der Erfindung.

Die erfindungsgemäße Baumaschine und das erfindungsgemäße Verfahren beruhen darauf, dass die Position mindestens eines für die Steuerung der Antriebseinheit der Baumaschine relevanten Referenzpunktes bei der Bewegung der Baumaschine in Abhängigkeit von dem Verlauf der Sollwegstrecke in einem auf die Baumaschine bezogenen Koordinatensystem verändert wird. Vorzugsweise wird die Position des Referenzpunktes kontinuierlich verändert.

Vor dem Übergang von einem im Wesentlichen geraden Abschnitt der Sollwegstrecke in einen gekrümmten Abschnitt der Sollwegstrecke, d. h. vor der Unstetigkeitsstelle, wird die Position des mindestens einen Referenzpunktes von einer in Arbeitsrichtung vorderen Position in eine in Arbeitsrichtung hintere Position verschoben, während nach dem Übergang von einem im Wesentlichen geraden Abschnitt der Sollwegstrecke in einen gekrümmten Abschnitt, d. h. nach der Unstetigkeitsstelle, die Position des mindestens einen Referenzpunktes von einer in Arbeitsrichtung hinteren Position in eine in Arbeitsrichtung vordere Position verschoben wird.

Dabei wird unter einer Verschiebung der Position des Referenzpunktes verstanden, dass für die Steuerung der Antriebseinheit nicht die Position eines festen Referenzpunktes in dem auf die Baumaschine bezogenen Koordinatensystem angenommen wird, sondern dass der Referenzpunkt für die Positionsbestimmung bei der Einfahrt in die Kurve wandert.

Dieser Referenzpunkt kann ein "gedachter" Punkt auf der Baumaschine sein. Auch kann die Sollwegstrecke eine "gedachte" Strecke sein. Dies ist dann der Fall, wenn die Festlegung der Sollwegstrecke in einem Koordinatensystem und die Positionsbestimmung des Referenzpunktes in Bezug auf die Sollwegstrecke unter dem Einsatz eines Globalen Navigationssatellitensystem (GNSS) erfolgt. Wenn die Sollwegsstrecke aber im Gelände durch einen Leitdraht festgelegt wird und eine Messung des Abstandes eines Referenzpunktes von einem Leitdraht mittels eines Abstandssensors erfolgt, wird der Referenzpunkt durch die Anordnung des Sensors an der Baumaschine festgelegt.

Unter einem im Wesentlichen geraden Abschnitt können in der Praxis auch Abschnitte verstanden werden, die einen Radius haben. In der Praxis kann ein Abschnitt, dessen Radius beispielsweise größer als 10 m ist, als ein im Wesentlichen gerader Abschnitt angesehen werden.

Bei einer bevorzugten Ausführungsform der Erfindung weist die Steuer- und Recheneinheit der Baumaschine Mittel zur Ermittlung der Abweichung von einem in Arbeitsrichtung vorderen und einem in Arbeitsrichtung hinteren Referenzpunkt der Baumaschine in Bezug auf eine Sollwegstrecke auf, wobei die Steuer- und Recheneinheit derart ausgebildet ist, dass in einem ersten Steuermodus bei einer Bewegung der Baumaschine auf einem im Wesentlichen geraden Abschnitt der Sollwegsstrecke die Antriebseinheit in Abhängigkeit von der Abweichung des in Arbeitsrichtung vorderen und hinteren Referenzpunktes gesteuert wird, so dass sich der vordere und hintere Referenzpunkt auf der Sollwegstrecke oder in einem vorgegebenen Abstand entlang der Sollwegstrecke bewegt, d. h. auf einer Äquidistanten zu der Sollwegstrecke bewegt.

Die Steuer- und Recheneinheit ist derart ausgebildet, dass der in Arbeitsrichtung vordere Referenzpunkt vor dem Übergang von einem im Wesentlichen geraden Abschnitt der Sollwegstrecke in einen gekrümmten Abschnitt der Sollwegstrecke von einer in Arbeitsrichtung vorderen Position in eine in Arbeitsrichtung hintere Position verschoben wird. Nach dem Übergang von einem im Wesentlichen geraden Abschnitt der Sollwegstrecke in einen gekrümmten Abschnitt der Sollwegstrecke wird der in Arbeitsrichtung vordere Referenzpunkt von der hinteren Position wieder in die in Arbeitsrichtung vordere Position verschoben.

Die Steuer- und Recheneinheit ist vorzugsweise derart ausgebildet, dass in einem zweiten Steuermodus bei einer Bewegung der Baumaschine auf einem gekrümmten Abschnitt der Sollwegsstrecke die Antriebseinheit in Abhängigkeit von der Position des in Arbeitsrichtung hinteren Referenzpunktes gesteuert wird, so dass sich der hintere Referenzpunkt auf der Sollwegstrecke oder in einem vorgegebenen Abstand entlang der Sollwegstrecke bewegt. Alternativ könnte die Maschine auf dem gekrümmten Abschnitt auch über zwei sehr dicht nebeneinander liegende Referenzpunkte gesteuert werden, von denen dann einer ein kurzes Stück vor und der andere ein kurzes Stück hinter dem Muldenausgang liegt.

Die Antriebseinheit mit den Antriebsmitteln zum Ausführen von translatorischen und/oder rotatorischen Bewegungen der Baumaschine in dem Gelände weist vorzugsweise vordere Räder oder Laufwerke und hintere Räder oder Laufwerke sowie eine Lenkeinrichtung zum Lenken der vorderen Räder oder Laufwerke und/oder der hinteren Räder oder Laufwerke auf.

Die Einfahrt in eine Kurve kann grundsätzlich von dem Fahrzeugführer eingeleitet werden, in dem der Fahrzeugführer beispielsweise einen Schalter, Taster oder dergleichen betätigt. Es ist aber auch möglich, dass die Kurveneinfahrt unter dem Einsatz eines Globalen Navigationssatellitensystems (GNSS) erkannt wird, wobei die Sollwegstrecke in einem Koordinatensystem festgelegt ist, so dass die Position der Unstetigkeitsstelle bekannt ist.

Im Folgenden wird ein Ausführungsbeispiel der Erfindung unter Bezugnahme auf die Zeichnungen näher erläutert.

Es zeigen:
- Fig. 1: ein Ausführungsbeispiel eines Gleitschalungsfertigers in der Seitenansicht,
- Fig. 2: ein Ausführungsbeispiel einer Straßenfräse in der Seitenansicht,
- Fig. 3.1: eine stark vereinfachte schematische Darstellung eines Gleitschalungsfertigers in einer ersten Position, wobei sich der Gleitschalungsfertiger entlang eines geraden Abschnitts einer vorgegebenen Sollwegstrecke bewegt,
- Fig. 3.2: den Gleitschalungsfertiger in einer zweiten Position, wobei sich der Gleitschalungsfertiger entlang des geraden Abschnitts auf eine erste Unstetigkeitsstelle der vorgegebenen Wegstrecke zu bewegt,
- Fig. 3.3: den Gleitschalungsfertiger in einer dritten Position, wobei sich der Gleitschalungsfertiger entlang des geraden Abschnitts auf die erste Unstetigkeitsstelle der vorgegebenen Wegstrecke weiter zu bewegt,
- Fig. 3.4: den Gleitschalungsfertiger in einer vierten Position, wobei sich der Gleitschalungsfertiger an der ersten Unstetigkeitsstelle der vorgegebenen Wegstrecke befindet,
- Fig. 3.5: den Gleitschalungsfertiger in einer fünften Position, wobei sich der Gleitschalungsfertiger an der ersten Unstetigkeitsstelle befindet,
- Fig. 3.6: den Gleitschalungsfertiger in einer sechsten Position, wobei sich der Gleitschalungsfertiger entlang eines gekrümmten Abschnitts der vorgegebenen Wegstrecke bewegt,
- Fig. 3.7: den Gleitschalungsfertiger in einer siebten Position, wobei sich der Gleitschalungsfertiger entlang des gekrümmten Abschnitts der vorgegebenen Wegstrecke auf eine zweite Unstetigkeitsstelle zu bewegt,
- Fig. 3.8: den Gleitschalungsfertiger in einer achten Position, wobei sich der Gleitschalungsfertiger entlang des gekrümmten Abschnitts der vorgegebenen Wegstrecke weiter auf die zweite Unstetigkeitsstelle zu bewegt,
- Fig. 3.9: den Gleitschalungsfertiger in einer neunten Position, wobei sich der Gleitschalungsfertiger an der zweiten Unstetigkeitsstelle befindet.

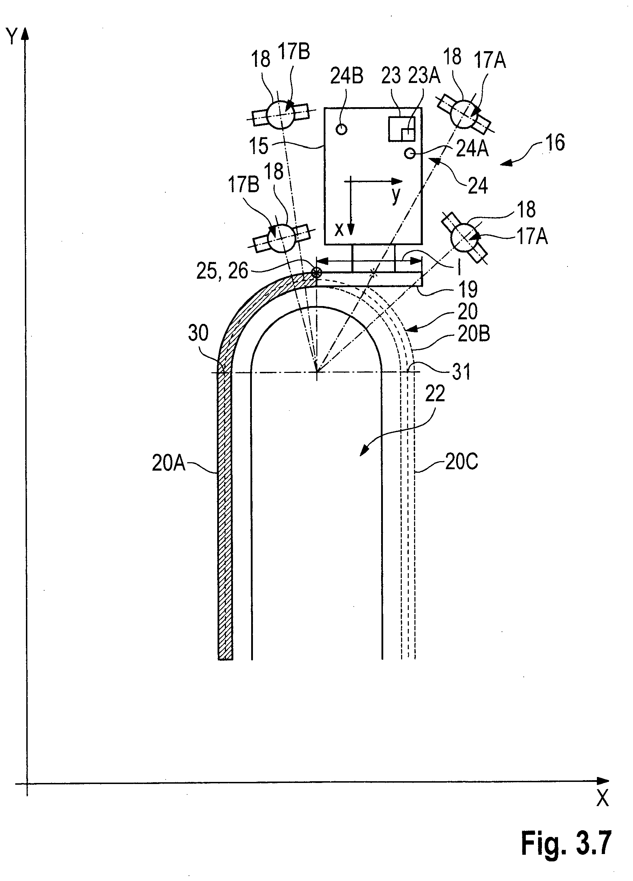

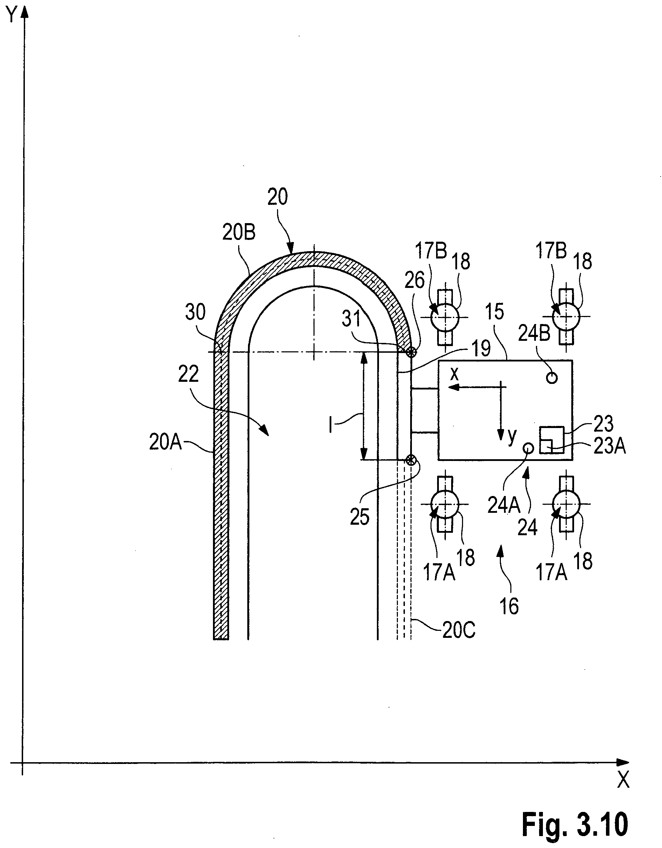

- Fig. 3.10: den Gleitschalungsfertiger in einer zehnten Position, wobei sich der Gleitschalungsfertiger an der zweiten Unstetigkeitsstelle befindet.

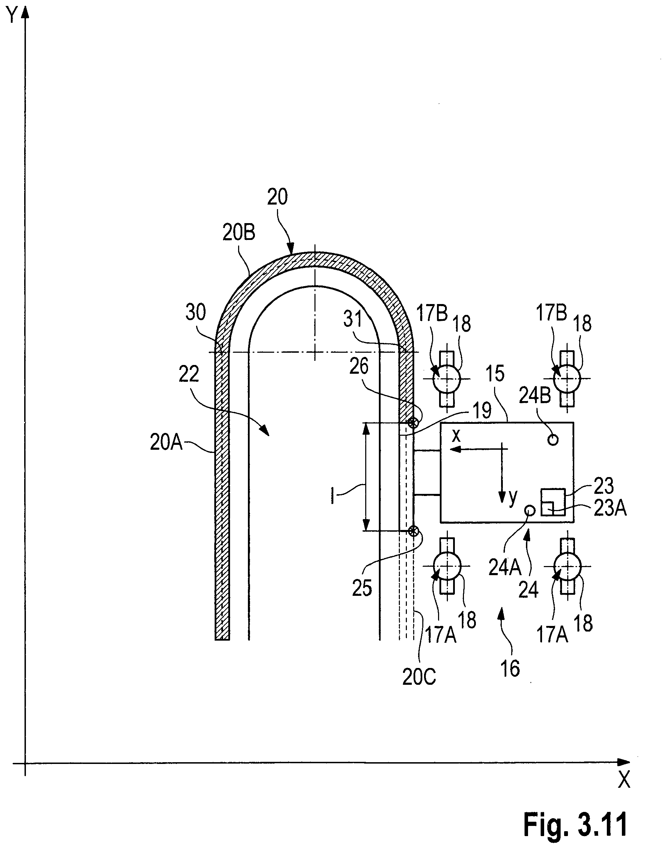

- Fig. 3.11: den Gleitschalungsfertiger in einer elften Position nach dem Übergang von dem gekrümmten Abschnitt in den geraden Abschnitt der vorgegebenen Wegstrecke.

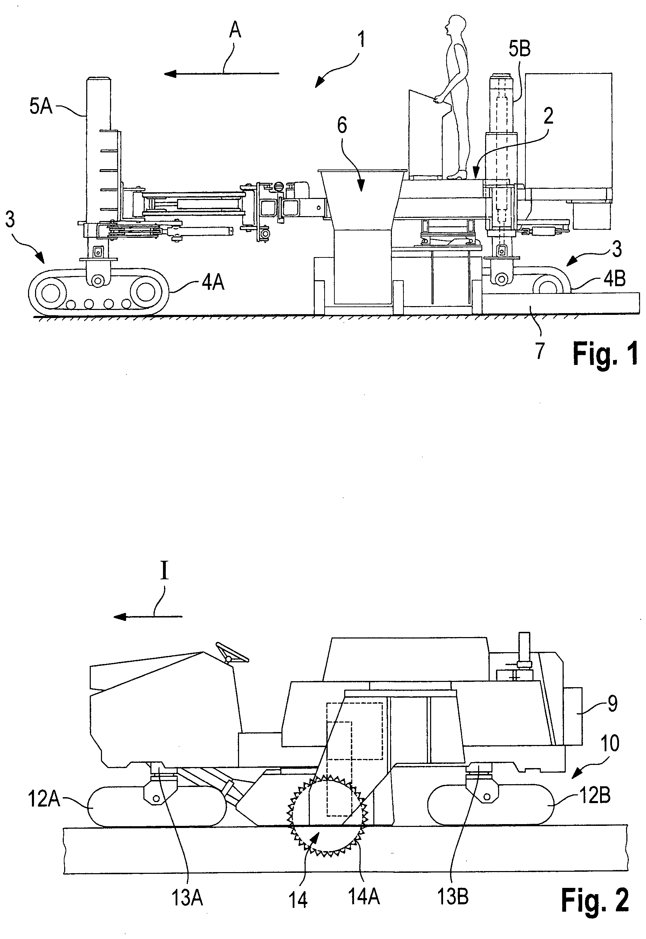

Die Fig. 1 zeigt als Beispiel für eine selbstfahrende Baumaschine einen Gleitschalungsfertiger in der Seitenansicht. Da Gleitschalungsfertiger als solche zum Stand der Technik gehören, werden hier nur die für die Erfindung wesentlichen Komponenten der Baumaschine beschrieben.

Der Gleitschalungsfertiger 1 weist einen Maschinenrahmen 2 auf, der von einem Fahrwerk 3 getragen wird. Das Fahrwerk 3 weist zwei vordere und zwei hintere Kettenlaufwerke 4A, 4B auf, die an vorderen und hinteren Hubsäulen 5A, 5B befestigt sind. Die Arbeitsrichtung (Fahrtrichtung) des Gleitschalungsfertigers ist mit einem Pfeil A gekennzeichnet.

Die Kettenlaufwerke 4A, 4B und Hubsäulen 5A, 5B sind Teil einer Antriebseinheit zum Ausführen von translatorischen und/oder rotatorischen Bewegungen der Baumaschine auf dem Gelände. Durch Anheben und Absenken der Hubsäulen 5A, 5B kann der Maschinenrahmen 2 gegenüber dem Boden in der Höhe und Neigung bewegt werden. Mit den lenkbaren Kettenlaufwerken 4A, 4B kann die Baumaschine vor- und zurückbewegt werden. Damit hat die Baumaschine drei translatorische und drei rotatorische Freiheitsgrade.

Der Gleitschalungsfertiger 1 verfügt über eine nur andeutungsweise dargestellte Vorrichtung 6 zum Formen von Beton, die nachfolgend als Betonmulde bezeichnet wird. Die Betonmulde ist Teil einer Arbeitseinheit mit Arbeitsmitteln zur Errichtung eines Baukörpers 7 mit einer vorgegebenen Form auf dem Gelände.

Fig. 2 zeigt als weiteres Beispiel für eine selbstfahrende Baumaschine eine Straßenfräse in der Seitenansicht. Auch die Straßenfräse weist wieder einen Maschinenrahmen 9 auf, der von einem Fahrwerk 10 getragen wird. Das Fahrwerk 10 weist wieder vordere und hintere Kettenlaufwerke 12A, 12B auf, die an vorderen und hinteren Hubsäulen 13A, 13B befestigt sind. Die Straßenfräse verfügt über eine Arbeitseinheit 14 mit Arbeitsmitteln zum Verändern des Geländes. Hierbei handelt es sich um eine Fräseinrichtung 14 mit einer mit Fräswerkzeugen bestückten Fräswalze 14A.

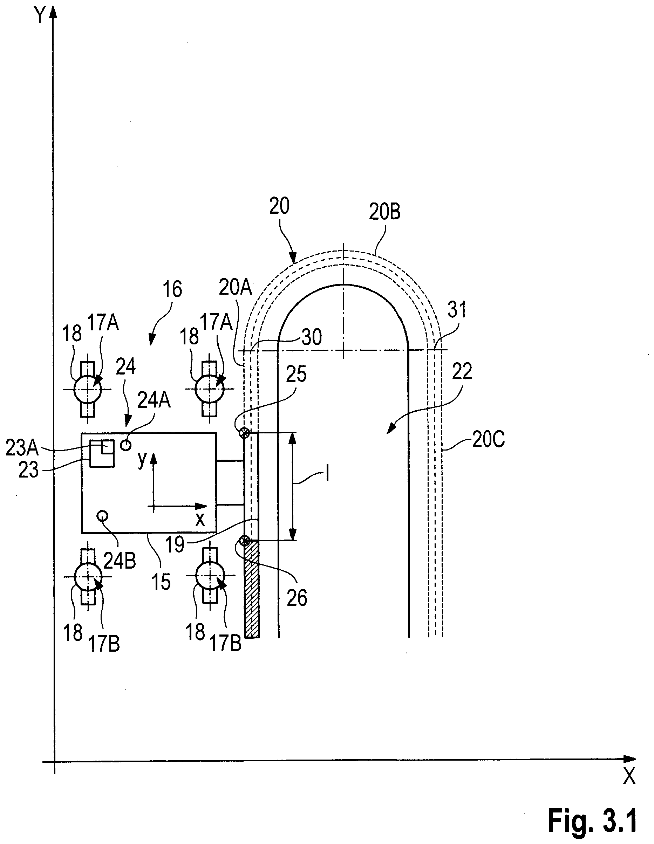

Die Figuren 3.1 bis 3.11 zeigen verschiedene Positionen einer nur stark vereinfacht dargestellten Baumaschine bei einer Kurveneinfahrt und -ausfahrt. Bei dem vorliegenden Ausführungsbeispiel handelt es sich um einen Gleitschalungsfertiger, der nur andeutungsweise dargestellt ist. Er weist einen Maschinenrahmen 15 und eine Antriebseinheit 16 mit vorderen und hinteren Kettenlaufwerken 17A, 17B, eine Lenkeinrichtung 18 zum Lenken der vorderen und hinteren Kettenlaufwerke 17A, 17B und eine Betonmulde 19 auf.

Der Gleitschalungsfertiger soll als Baukörper eine Verkehrsinsel 22 in Form einer "Zigarre" fertigen. Hierzu muss sich der Gleitschalungsfertiger entlang einer vorgegebenen Wegstrecke bewegen, die nachfolgend als Sollwegstrecke 20 bezeichnet wird. Die Figuren 3.1 bis 3.11 zeigen nur einen Teil der Sollwegstrecke, mit der die geometrische Form der Zigarre beschrieben wird.

Die Sollwegstrecke 20 weist einen ersten geraden Abschnitt 20A auf, der in einen Radius 20B von 180° übergeht, an die sich wieder ein gerader Abschnitt 20C anschließt. Bei dem vorliegenden Ausführungsbeispiel wird der Verlauf der Sollwegstrecke in einem von der Bewegung der Baumaschine unabhängigen Koordinatensystem (X, Y) festgelegt. Neben dem festen Koordinatensystem (X, Y) ist in den Figuren 3.1 bis 3.11 ein auf die Baumaschine bezogenes Koordinatensystem (x, y) dargestellt.

Zum Steuern der Antriebseinheit 16 verfügt die Baumaschine über eine nur andeutungsweise dargestellte Steuer- und Recheneinheit 23. Die Steuer- und Recheneinheit 23 steuert die Antriebseinheit 16 derart an, dass die Baumaschine auf dem Gelände die erforderlichen translatorischen und/oder rotatorischen Bewegungen ausführt, um den Baukörper 22 errichten oder das Gelände verändern zu können, wobei sich die Baumaschine entlang der vorgegebenen Sollwegstrecke bewegt. Die Steuer- und Recheneinheit 23 umfasst sämtliche zur Durchführung von Rechenoperationen und zur Erzeugung von Steuersignalen für die Antriebseinheit 16 erforderlichen Komponenten. Sie kann eine eigenständige Baugruppe bilden oder aus mehreren separaten Baugruppen bestehen, die nicht nur auf der Baumaschine, sondern teilweise oder ganz auch neben der Baumaschine im Gelände angeordnet sein können.

Bei dem vorliegenden Ausführungsbeispiel weist die Steuer- und Recheneinheit 23 ein Globales Navigationssatellitensystem (GNSS) 24 auf, das einen ersten GNSS-Empfänger 24A und einen zweiten GNSS-Empfänger 24B umfasst, die auf der Baumaschine an unterschiedlichen Positionen angeordnet sind. Neben den beiden GNSS-Empfängern kann das Globale Navigationssatellitensystem (GNSS) noch eine nicht dargestellte Referenzstation zur Erzeugung von Korrektursignalen im Gelände aufweisen. Das GNSS-System 24 ermittelt mit den beiden GNSS-Empfängern Daten, die die Position der GNSS-Empfänger in dem Koordinatensystem (X, Y) angeben. Darüber hinaus kann die Steuer- und Recheneinheit eine speicherprogrammierbare Steuerung umfassen, die auch als SPS bezeichnet wird.

Aus der Position der beiden GNSS-Empfänger 24A, 24B und der bekannten Geometrie der Baumaschine berechnet die Steuer- und Recheneinheit 23 die Position eines in Arbeitsrichtung vorderen Referenzpunktes 25 und die Position eines in Arbeitsrichtung hinteren Referenzpunktes 26 an der Baumaschine. Beide Referenzpunkte 25, 26 liegen auf einer Geraden, die parallel zu der Längsachse der Baumaschine verläuft. Dabei liegt der hintere Referenzpunkt 26 auf der Höhe der in Fahrtrichtung inneren, hinteren Kante der Betonmulde 19. Diese Kante entspricht der äußeren Begrenzung des zu errichtenden Baukörpers 22. Beide Referenzpunkte sind im Abstand 1 angeordnet.

Die Steuer- und Recheneinheit 23 weist weiterhin Mittel zur Ermittlung von den Verlauf der Sollwegstrecke 20 beschreibenden Daten auf. Der Verlauf der Sollwegstrecke wird mit einem virtuellen Design-Modell in dem Koordinatensystem (X, Y) vorgegeben. Dieses Design-Modell kann manuell eingegeben oder von einem Datenträger in einen Speicher 23A der Steuer- und Recheneinheit 23 eingelesen werden.

Darüber hinaus weist die Steuer- und Recheneinheit 23 Mittel zur Ermittlung der Abweichung der Position des in Arbeitsrichtung vorderen Referenzpunktes 25 und des in Arbeitsrichtung hinteren Referenzpunkt 25 in Bezug auf die Sollwegstrecke 20 auf.

Die Steuer- und Recheneinheit 23 steuert die Antriebseinheit, d.h. die vorderen und hinteren Kettenlaufwerke 17A, 17B, in Abhängigkeit von dem Abstand zwischen dem Referenzpunkt und der Sollwegstrecke. Hierzu sieht die Steuer- und Recheneinheit zwei unterschiedliche Arten der Steuerung vor.

In dem ersten Steuermodus wird die Antriebseinheit 16 in Abhängigkeit von dem Abstand zwischen dem hinteren Referenzpunkt 26 und der Sollwegstrecke 20 und in Abhängigkeit von dem Abstand zwischen dem vorderen Referenzpunkt 25 und der Sollwegstrecke gesteuert. Die Steuerung der Antriebseinheit erfolgt derart, dass bei der Vorschubbewegung der Baumaschine der Abstand sowohl des hinteren als auch vorderen Referenzpunktes einem vorgegebenen Wert entspricht, d. h. sich die Baumaschine in einem vorgegebenen Abstand entlang der Sollwegstrecke bewegt. Dabei wird die Schwenkposition des hinteren Kettenlaufwerks 17B in Abhängigkeit von der Abweichung des hinteren Referenzpunktes 26 und die Schwenkposition des vorderen Kettenlaufwerks 17A in Abhängigkeit von der Abweichung des vorderen Referenzpunktes 25 von der Sollwegstrecke 20 gesteuert. Die Abweichung der Referenzpunkte zu der Sollwegstrecke wird von der Steuer- und Recheneinheit unter dem Einsatz des GPS-Systems 24 berechnet.

In dem zweiten Steuermodus wird die Antriebseinheit 16 hingegen nur in Abhängigkeit von der Abweichung zwischen dem hinteren Referenzpunkt 26 und der Sollwegstrecke 20 gesteuert. Die Steuerung der vorderen Kettenlaufwerke 17A erfolgt derart, dass bei der Vorschubbewegung der Baumaschine der Abstand des hinteren Referenzpunktes 26 der Baumaschine einem vorgegebenen Wert entspricht, d.h. sich der hintere Referenzpunkt in einem vorgegebenen Abstand entlang der Sollwegstrecke bewegt.

Die Figuren 3.1 bis 3.5 zeigen die Vorschubbewegung der Baumaschine entlang des geraden Abschnitts 20A der Sollwegstrecke 20. Während dieser Bewegung gibt die Steuer- und Recheneinheit 23 den ersten Steuermodus vor, so dass beide Referenzpunkte 25, 26 "aktiv" sind. Dabei liegen beide Referenzpunkte hintereinander in dem vorgegebenen Abstand 1 auf der zu der Längsachse der Maschine parallelen Achse.

Auf der Fahrt entlang des geraden Abschnitts 20A nähert sich die Baumaschine der ersten Unstetigkeitsstelle 30, d.h. der Stelle, an der der gerade Abschnitt 20A in den gekrümmten Abschnitt 20B übergeht. Dabei ermittelt die Steuer- und Recheneinheit 23 neben der Abweichung der Referenzpunkte von der Sollwegstrecke laufend die Wegstrecke, die die Referenzpunkte zurückgelegt haben. Die zurückgelegte Wegstrecke wird nachfolgend als Stationierung bezeichnet. Da der Abstand 1 der Referenzpunkte bekannt ist, braucht nur die von einem der Referenzpunkt zurückgelegte Wegstrecke ermittelt werden, da sich die von dem anderen Referenzpunkt zurückgelegte Wegstrecke dann berechnen lässt.

Der in Arbeitsrichtung vordere Referenzpunkt 25 bewegt sich nun auf die Unstetigkeitsstelle 30 zu. Die Steuer- und Recheneinheit 13 ermittelt dabei, ob sich der vordere Referenzpunkt noch auf dem geraden Abschnitt 20A oder schon auf dem gekrümmten Abschnitt befindet, in dem die Position des vorderen Referenzpunktes mit dem hinterlegten Design-Modell verglichen wird. Folglich liegen neben der Abweichung und der Stationierung noch Daten über die Krümmung der Sollwegstrecke vor, d. h. Daten, die angeben, ob sich der Referenzpunkt auf oder neben einem geraden oder gekrümmten Abschnitt der Sollwegstrecke befindet. Sämtliche Daten werden fortlaufend in den Speicher 23A der Steuer- und Recheneinheit 23 geschrieben.

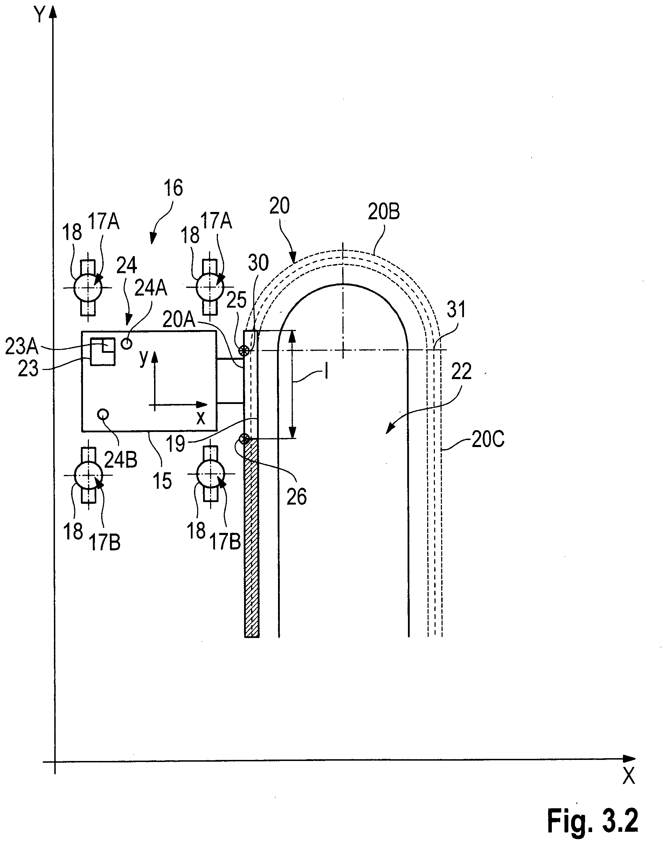

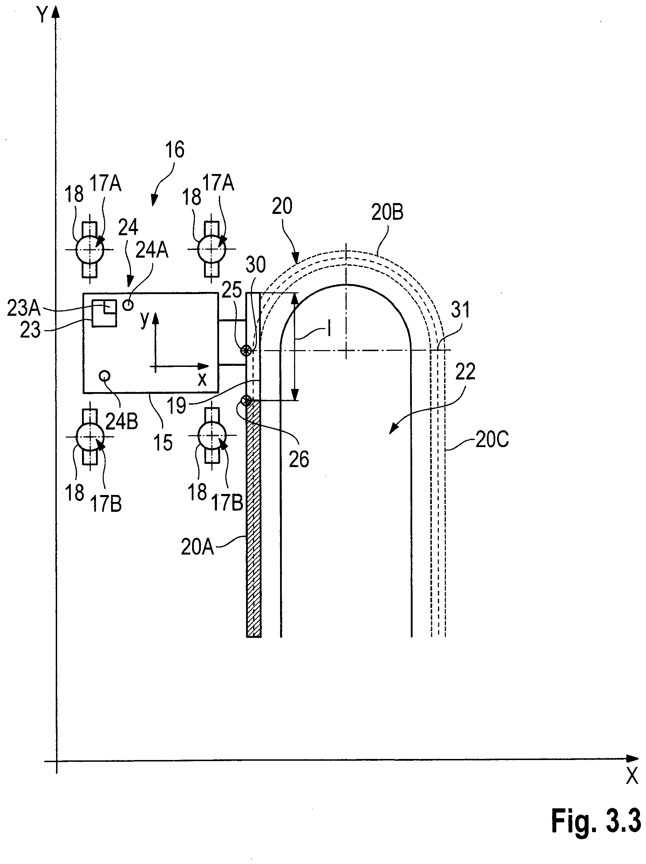

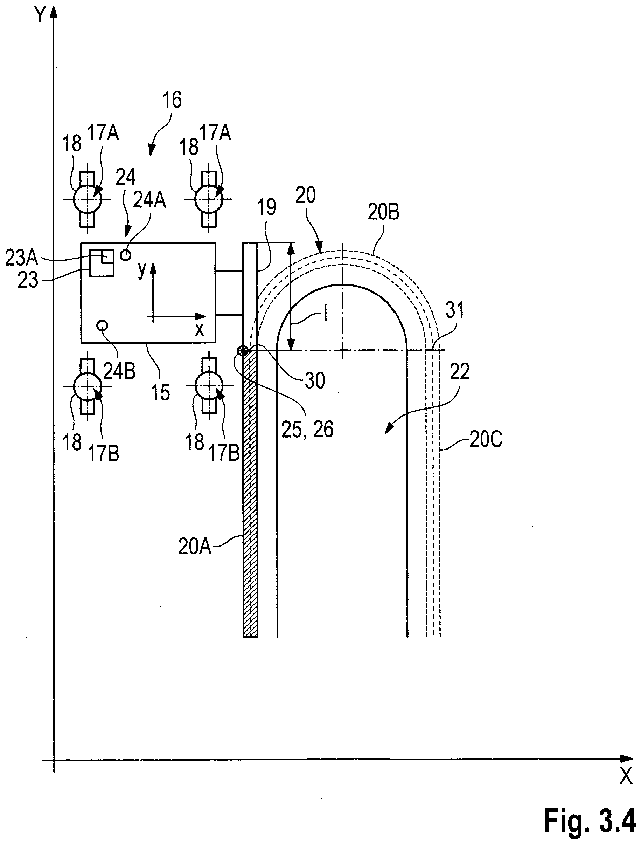

Zu dem Zeitpunkt, zu dem der in Arbeitsrichtung vordere Referenzpunkt 25 die Unstetigkeitsstelle 30 erreicht, wird die Position des vorderen Referenzpunktes verändert. Zu diesem Zeitpunkt erzeugt die Steuer- und Recheneinheit ein Steuersignal, da der vordere Referenzpunkt den Beginn der Kurve "erkennt". Der vordere Referenzpunkt 25 wird dann entgegen der Arbeitsrichtung in dem auf die Baumaschine bezogenen Koordinatensystem (x, y) auf der Geraden solange nach hinten verschoben (Fig. 3.2 und Fig. 3.3), bis der vordere Referenzpunkt in einem vorgegebenen Abstand zu dem hinteren Referenzpunkt auf der Geraden liegt oder vorzugsweise der vordere Referenzpunkt auf dem hinteren Referenzpunkt liegt (Fig. 3.4). Dabei verringert sich jeweils der ursprüngliche Abstand 1 zwischen beiden Referenzpunkten um den Betrag, wie die Stationierung zunimmt. Die Verschiebung des vorderen Referenzpunktes erfolgt vorzugsweise kontinuierlich. Das Steuersignal wird von der Steuer- und Recheneinheit vorzugsweise dann erzeugt, wenn der Referenzpunkt exakt auf der Unstetigkeitsstelle liegt. Es ist aber grundsätzlich auch möglich, dass das Steuersignal erzeugt wird, wenn sich der Referenzpunkt nicht exakt auf der Unstetigkeitsstelle, sondern im Bereich des Übergangs zwischen dem im Wesentlichen geraden Abschnitt (20A) und dem gekrümmten Abschnitt (20B) befindet, d. h. ein kurzes Stück vor oder ein kurzes Stück hinter der Unstetigkeitsstelle liegt. In der Praxis wird das Steuersignal erzeugt, wenn sich der Referenzpunkt ein kurzes Stück vor der Unstetigkeitsstelle befindet, wodurch die Lenkbewegung eingeleitet wird, und die Lenkbewegung wird dann beendet, wenn sich der Referenzpunkt ein kurzes Stück nach der Unstetigkeitsstelle befindet.

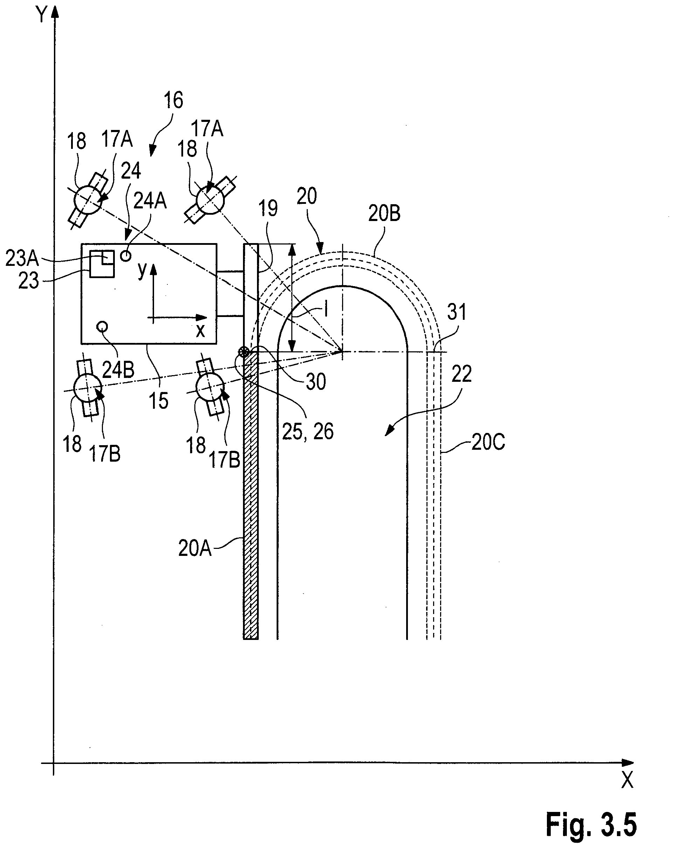

Die Fig. 3.4 und 3.5 zeigen, dass die vorderen Kettenlaufwerke 17A und die hinteren Kettenlaufwerke 17B genau dann eingelenkt werden, wenn der vordere und hintere Referenzpunkt 25, 26 auf der Unstetigkeitsstelle 30 liegen. In der Praxis wird der Vorgang des Einlenkens aber schon dann eingeleitet, wenn sich der vordere Referenzpunkt noch eine vorgegebene Wegstrecke vor der Unstetigkeitsstelle befindet. Entsprechend wird der Vorgang des Einlenkens erst dann beendet, wenn sich der vordere Referenzpunkt eine vorgegebene Wegstrecke hinter der Unstetigkeitsstelle befindet.

Während des Einlenkens erfolgt von der Steuer- und Recheneinheit 23 die Umschaltung von dem ersten auf den zweiten Steuermodus. Diese Umschaltung kann grundsätzlich aber auch von dem Fahrzeugführer manuell vorgenommen werden.

Wenn die Steuer- und Recheneinheit 23 den zweiten Steuermodus vorgegeben hat, in dem nur der hintere Referenzpunkt 26 "aktiv" ist, werden die vorderen Kettenlaufwerke 17A nur in Abhängigkeit von dem Abstand des hinteren Referenzpunktes 26 zu der Sollwegstrecke 20 gesteuert. Die Stellung der vorderen und hinteren Kettenlaufwerke genügen dabei vorzugsweise der bekannten Ackermann-Bedingung, was in den Figuren mit gestrichelten Linien angedeutet ist.

Wenn die hinteren Kettenlaufwerke auf der Höhe der Betonmulde liegen, können die hinteren Kettenlaufwerke gerade aus gelenkt bleiben. Ansonsten werden die Kettenlaufwerke auf einen theoretischen oder rechnerischen Lenkwinkel eingestellt, der nicht verändert wird. Dieser Lenkwinkel sollte der Ackermann-Bedingung genügen.

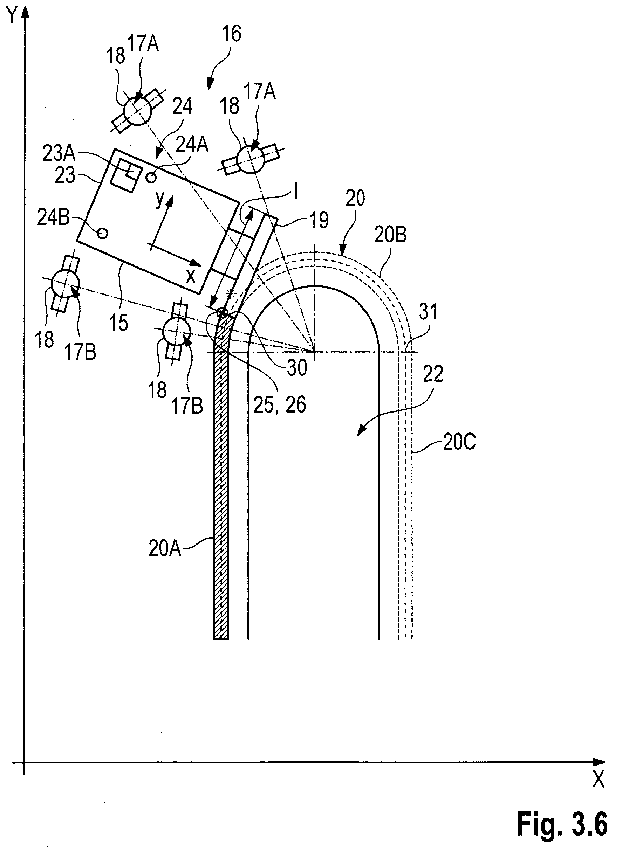

Die Figuren 3.6 bis 3.9 zeigen, wie sich der hintere Referenzpunkt 26 in einem vorgegebenen Abstand entlang des gekrümmten Abschnitts 20B der Sollwegstrecke 20 bewegt. Dabei erfolgt die Lenkung nur mit den vorderen Kettenlaufwerken 17A, während die Stellung der hinteren Kettenlaufwerke 17B nicht mehr verändert wird.

Wenn der zuvor hintere Referenzpunkt 26, der mit dem zuvor vorderen Referenzpunkt 25 deckungsgleich sein kann, die Unstetigkeitsstelle erreicht hat, erzeugt die Steuer- und Recheneinheit 23 wieder ein Steuersignal, wonach der vordere Referenzpunkt 25 in Arbeitsrichtung wieder nach vorne verschoben wird.

Die Verschiebung des vorderen Referenzpunktes 25 erfolgt solange, bis der Abstand zwischen den beiden Punkten wieder dem ursprünglichen Abstand 1 entspricht. Folglich eilt der nicht "aktive" vordere Referenzpunkt 25 dem "aktiven" hinteren Referenzpunkt 26 voraus. Der vordere Referenzpunkt 25 ist als Stern dargestellt, da er nicht "aktiv" ist.

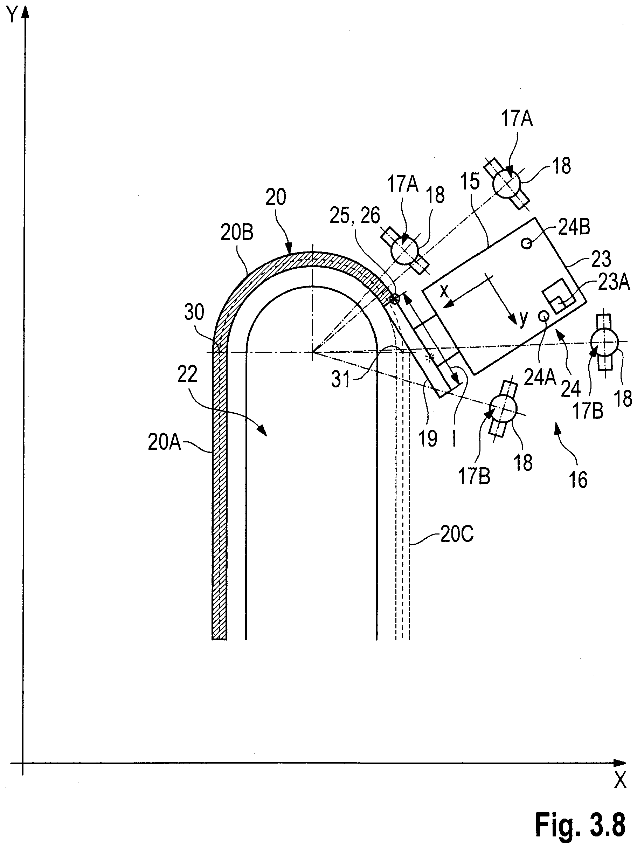

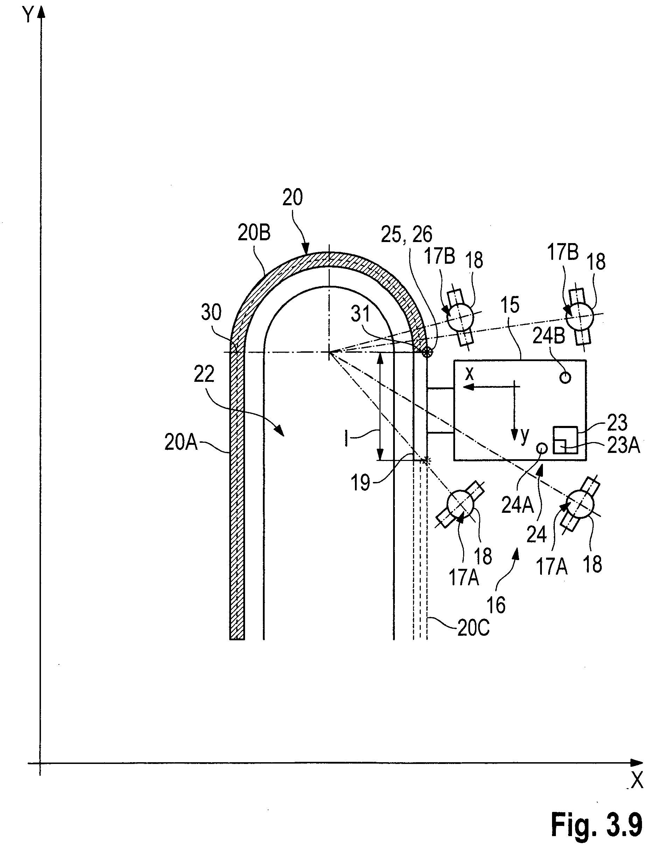

Fig. 3.8 zeigt die Baumaschine während der Bewegung entlang des gekrümmten Abschnitts der vorgegebenen Wegstrecke. Wenn sich der hintere Referenzpunkt 26 der Baumaschine auf der Unstetigkeitsstelle 31 befindet (Fig. 3.9), werden die vorderen und hinteren Kettenlaufwerke 17A, 17B wieder auf Geradeausfahrt gestellt (Fig. 3.10). Bei der Kurvenausfahrt wird dieser Lenkvorgang analog zu der Kurveneinfahrt in der Praxis aber schon dann eingeleitet, wenn sich der hintere Referenzpunkt 26 noch eine vorgegebene Wegstrecke vor der Unstetigkeitsstelle befindet. Entsprechend werden die Kettenlaufwerke erst dann auf Geradeausfahrt gestellt sein, wenn sich der hintere Referenzpunkt eine vorgegebene Wegstrecke hinter der Unstetigkeitsstelle befindet.

Daraufhin gibt die Steuer- und Recheneinheit 23 wieder den ersten Steuermodus vor, so dass die Steuerung wieder in Abhängigkeit von der Abweichung beider Referenzpunkte von der Sollwegstrecke erfolgt. Die Baumaschine bewegt sich jetzt wieder entlang eines geraden Abschnitts 30B wie vor der Einfahrt in die Kurve.

Mit der Verschiebung des vorderen Referenzpunktes 25 beim Übergang von einem geraden Abschnitt in einen gekrümmten Abschnitt wird eine exakte Führung der Baumaschine entlang der Sollwegstrecke erreicht.

Eine alternative Ausführungsform der Baumaschine sieht nicht den Einsatz eines Globalen Navigationssatellitensystems (GNSS), sondern eines Leitdrahtes vor. Diese Ausführungsform unterscheidet sich von dem Ausführungsbeispiel mit dem GNSS-System nur dadurch, dass an dem vorderen und hinteren Referenzpunkt jeweils ein nicht dargestellter Sensor zum Messen des Abstandes zu einem nicht dargestellten Leitdraht anstelle der virtuellen Sollwegstrecke vorgesehen ist. Der Leitdraht verläuft dann auf der durchgezogenen Linie (Äquidistante) im Inneren des Baukörpers. Die Anordnung der Sensoren ist also mit der Anordnung der Referenzpunkte identisch. Die Abstandssensoren können mechanische Tastelemente aufweisen oder berührungslos arbeitende Ultraschallsensoren sein. Derartige Sensoren sind im Stand der Technik bekannt. Der in Arbeitsrichtung hintere Sensor kann fest an dem Maschinenrahmen befestigt sein, während der vordere Sensor an einer Schiene am Maschinenrahmen längsverschiebbar geführt sein kann. Die Verschiebung des vorderen Sensors kann mit einem nicht dargestellten Antrieb erfolgen, der beispielsweise ein elektromotorischer Spindelantrieb sein kann. Bei der alternativen Ausführungsform erfolgt also nicht die Verschiebung des vorderen Referenzpunktes, sondern des Abstandssensors selbst, wobei nicht der Abstand zu einer durch Koordinaten in einem Koordinatensystem beschriebenen Sollwegstrecke berechnet, sondern der Abstand zu einem Leitdraht gemessen wird, der auf der Sollwegstrecke verläuft. Bei beiden Ausführungsformen ergeben sich die oben genannten Vorteile durch die Verschiebung des Referenzpunktes bzw. des auf einem Referenzpunkt liegenden Sensors.

## Patentansprüche

1. Selbstfahrende Baumaschine, insbesondere Gleitschalungsfertiger, mit einem Maschinenrahmen (3),
einer am Maschinenrahmen angeordneten Arbeitseinheit (6) mit Arbeitsmitteln zur Errichtung von Baukörpern auf einem Gelände oder zum Verändern des Geländes,
einer Antriebseinheit (16) zum Ausführen von translatorischen und/oder rotatorischen Bewegungen der Baumaschine in dem Gelände, und
einer Steuer- und Recheneinheit (23), die aufweist:
Mittel zur Ermittlung der Abweichung mindestens eines Referenzpunktes (25) der Baumaschine in Bezug auf eine Sollwegstrecke (20), wobei die Sollwegstrecke durch mindestens eine Gerade und/oder mindestens eine Kurve beschrieben wird, und
Mittel zum Steuern der Antriebseinheit in Abhängigkeit von der Abweichung des mindestens einen Referenzpunktes (25) der Baumaschine in Bezug auf die Sollwegstrecke (20), so dass sich der Referenzpunkt auf der Sollwegstrecke oder in einem vorgegebenen Abstand entlang der Sollwegstrecke bewegt,
**dadurch gekennzeichnet, dass**
die Steuer- und Recheneinheit (23) derart ausgebildet ist, dass die Position des mindestens einen Referenzpunktes (25) bei der Bewegung der Baumaschine in Abhängigkeit von dem Verlauf der Sollwegstrecke (20) in einem auf die Baumaschine bezogenen Koordinatensystem (x, y) durch die Steuer- und Recheneinheit (23) verschoben wird, wobei
die Steuer- und Recheneinheit (23) derart ausgebildet ist, dass die Position des mindestens einen Referenzpunktes (25) vor dem Übergang von einem im Wesentlichen geraden Abschnitt (20A) der Sollwegstrecke (20) in einen gekrümmten Abschnitt (20B) der Sollwegstrecke von einer in Arbeitsrichtung vorderen Position in eine in Arbeitsrichtung hintere Position verschiebbar ist, und/oder
die Steuer- und Recheneinheit (23) derart ausgebildet ist, dass die Position des mindestens einen Referenzpunktes (25) nach dem Übergang von einem im Wesentlichen geraden Abschnitt (20A) der Sollwegstrecke in einen gekrümmten Abschnitt (20B) der Sollwegstrecke von einer in Arbeitsrichtung hinteren Position in eine in Arbeitsrichtung vordere Position verschiebbar ist.

2. Baumaschine nach Anspruch 1, **dadurch gekennzeichnet, dass** die Steuer- und Recheneinheit (23) Mittel zur Ermittlung der Abweichung von einem in Arbeitsrichtung vorderen Referenzpunkt (25) und einem in Arbeitsrichtung hinteren Referenzpunkt (26) der Baumaschine in Bezug auf eine Sollwegstrecke (20) aufweist, wobei die Steuer- und Recheneinheit (23) derart ausgebildet ist, dass in einem ersten Steuermodus bei einer Bewegung der Baumaschine auf einem im Wesentlichen geraden Abschnitt (20A, 20B) der Sollwegsstrecke die Antriebseinheit in Abhängigkeit von der Abweichung des in Arbeitsrichtung vorderen und hinteren Referenzpunktes gesteuert wird, so dass sich der vordere und hintere Referenzpunkt auf der Sollwegstrecke oder in einem vorgegebenen Abstand entlang der Sollwegstrecke bewegt.

3. Baumaschine nach Anspruch 2, **dadurch gekennzeichnet, dass** die Steuer- und Recheneinheit (23) derart ausgebildet ist, dass der in Arbeitsrichtung vordere Referenzpunkt (25) vor dem Übergang von einem im Wesentlichen geraden Abschnitt der Sollwegstrecke in einen gekrümmten Abschnitt der Sollwegstrecke von einer in Arbeitsrichtung vorderen Position in eine in Arbeitsrichtung hintere Position verschiebbar ist.

4. Baumaschine nach Anspruch 2 oder 3, **dadurch gekennzeichnet, dass** die Steuer- und Recheneinheit (23) derart ausgebildet ist, dass der in Arbeitsrichtung vordere Referenzpunkt (25) nach dem Übergang von einem im Wesentlichen geraden Abschnitt der Sollwegstrecke in einen gekrümmten Abschnitt der Sollwegstrecke von einer in Arbeitsrichtung hinteren Position in eine in Arbeitsrichtung vordere Position verschiebbar ist.

5. Baumaschine nach einem der Ansprüche 1 bis 4, **dadurch gekennzeichnet, dass** die Steuer- und Recheneinheit (23) Mittel zur Ermittlung der Abweichung von einem in Arbeitsrichtung vorderen Referenzpunkt (25) und einem in Arbeitsrichtung hinteren Referenzpunkt (26) der Baumaschine in Bezug auf eine Sollwegstrecke (20) aufweist, wobei die Steuer- und Recheneinheit (23) derart ausgebildet ist, dass in einem zweiten Steuermodus bei einer Bewegung der Baumaschine auf einem gekrümmten Abschnitt (20B) der Sollwegsstrecke die Antriebseinheit in Abhängigkeit von der Position des in Arbeitsrichtung hinteren Referenzpunktes (26) gesteuert wird, so dass sich der hintere Referenzpunkt auf der Sollwegstrecke oder in einem vorgegebenen Abstand entlang der Sollwegstrecke bewegt.

6. Baumaschine nach einem der Ansprüche 2 bis 5, **dadurch gekennzeichnet, dass** die Antriebseinheit (16) zum Ausführen von translatorischen und/oder rotatorischen Bewegungen der Baumaschine in dem Gelände vordere Räder oder Laufwerke (17A) und hintere Räder oder Laufwerke (17B) sowie eine Lenkeinrichtung (18) zum Lenken der vorderen Räder oder Laufwerke und/oder der hinteren Räder oder Laufwerke aufweist, wobei die Steuer- und Recheneinheit (23) derart ausgebildet ist, dass in dem ersten Steuermodus in Abhängigkeit von der Abweichung des vorderen Referenzpunktes (25) von der Sollwegstrecke (20) und der Abweichung von dem hinteren Referenzpunkt (26) von der Sollwegstrecke (20) die Stellung der vorderen Räder oder Laufwerke (17A) und der hinteren Räder oder Laufwerke (17B) veränderbar ist und in dem zweiten Steuermodus in Abhängigkeit von der Abweichung des hinteren Referenzpunktes (26) von der Sollwegstrecke (20) die Stellung der vorderen Räder oder Laufwerke (17A) veränderbar ist.

7. Baumaschine nach einem der Ansprüche 1 bis 6, **dadurch gekennzeichnet, dass** die Steuer- und Recheneinheit (23) Mittel zur Ermittlung von den Verlauf der Sollwegstrecke beschreibenden Daten aufweist, wobei die Steuer- und Recheneinheit (23) derart ausgebildet ist, dass ein erstes Steuersignal erzeugt wird, wenn der sich in Arbeitsrichtung vordere Referenzpunkt (26) im Bereich des Übergangs zwischen einem im Wesentlichen geraden Abschnitt (20A) und einem gekrümmten Abschnitt (20B) befindet, so dass der vordere Referenzpunkt (25) von einer in Arbeitsrichtung vorderen Position in eine in Arbeitsrichtung hintere Position verschiebbar ist.

8. Baumaschine nach einem der Ansprüche 1 bis 6, **dadurch gekennzeichnet, dass** die Steuer- und Recheneinheit (23) Mittel zur Ermittlung von den Verlauf der Sollwegstrecke beschreibenden Daten aufweist, wobei die Steuer- und Recheneinheit (23) derart ausgebildet ist, dass ein zweites Steuersignal erzeugt wird, wenn der sich in Arbeitsrichtung hintere Referenzpunkt (25) im Bereich des Übergangs zwischen einem im Wesentlichen geraden Abschnitt und einem gekrümmten Abschnitt befindet, so dass der vordere Referenzpunkt (25) von einer in Arbeitsrichtung hinteren Position in eine in Arbeitsrichtung vordere Position verschiebbar ist.

9. Baumaschine nach einem der Ansprüche 1 bis 8, **dadurch gekennzeichnet, dass** die Steuer- und Recheneinheit ein Globales Navigationssatellitensystem zur Positionsbestimmung (GNSS) (24) und eine speicherprogrammierbare Maschinensteuerung (SPS) umfasst.

10. Verfahren zum Steuern einer Antriebseinheit einer selbstfahrenden Baumaschine, insbesondere Gleitschalungsfertiger, zum Ausführen von translatorischen und/oder rotatorischen Bewegungen der Baumaschine in dem Gelände, bei dem die Abweichung mindestens eines Referenzpunktes der Baumaschine in Bezug auf eine Sollwegstrecke, die durch mindestens eine Gerade und/oder eine Kurve beschrieben wird, ermittelt wird,
wobei die Antriebseinheit in Abhängigkeit von der Abweichung des mindestens einen Referenzpunktes der Baumaschine in Bezug auf die Sollwegstrecke derart gesteuert wird, dass sich der Referenzpunkt der Baumaschine auf der Sollwegstrecke oder in einem vorgegebenen Abstand entlang der Sollwegstrecke bewegt,
**dadurch gekennzeichnet, dass**
die Position des mindestens einen Referenzpunktes in Abhängigkeit von dem Verlauf der Sollwegstrecke in einem auf die Baumaschine bezogenen Koordinatensystem verschoben wird, wobei
die Position des mindestens einen Referenzpunktes vor dem Übergang von einem im Wesentlichen geraden Abschnitt der Sollwegstrecke in einen gekrümmten Abschnitt der Sollwegstrecke von einer in Arbeitsrichtung vorderen Position in eine in Arbeitsrichtung hintere Position verschoben wird, und/oder
die Position des mindestens einen Referenzpunktes nach dem Übergang von einem im Wesentlichen geraden Abschnitt der Sollwegstrecke in einen gekrümmten Abschnitt der Sollwegstrecke von einer in Arbeitsrichtung hinteren Position in eine in Arbeitsrichtung vordere Position verschoben wird.

11. Verfahren nach Anspruch 10, **dadurch gekennzeichnet, dass** die Abweichung von einem in Arbeitsrichtung vorderen und einem in Arbeitsrichtung hinteren Referenzpunkt der Baumaschine in Bezug auf eine Sollwegstrecke ermittelt wird, wobei in einem ersten Steuermodus bei einer Bewegung der Baumaschine auf einem im Wesentlichen geraden Abschnitt der Sollwegsstrecke die Antriebseinheit in Abhängigkeit von der Abweichung des in Arbeitsrichtung vorderen und hinteren Referenzpunktes gesteuert wird, so dass sich der vordere und hintere Referenzpunkt auf der Sollwegstrecke oder in einem vorgegebenen Abstand entlang der Sollwegstrecke bewegt.

12. Verfahren nach Anspruch 11, **dadurch gekennzeichnet, dass** der in Arbeitsrichtung vordere Referenzpunkt vor dem Übergang von einem im Wesentlichen geraden Abschnitt der Sollwegstrecke in einen gekrümmten Abschnitt der Sollwegstrecke von einer in Arbeitsrichtung vorderen Position in eine in Arbeitsrichtung hintere Position verschoben wird.

13. Verfahren nach Anspruch 11 oder 12, **dadurch gekennzeichnet, dass** der in Arbeitsrichtung vordere Referenzpunkt nach dem Übergang von einem im Wesentlichen geraden Abschnitt der Sollwegstrecke in einen gekrümmten Abschnitt der Sollwegstrecke von einer in Arbeitsrichtung hinteren Position in eine in Arbeitsrichtung vordere Position verschoben wird.

14. Verfahren nach einem der Ansprüche 10 bis 13, **dadurch gekennzeichnet, dass** die Abweichung von einem in Arbeitsrichtung vorderen und einem in Arbeitsrichtung hinteren Referenzpunkt der Baumaschine in Bezug auf eine Sollwegstrecke ermittelt wird, wobei in einem zweiten Steuermodus bei einer Bewegung der Baumaschine auf einem gekrümmten Abschnitt der Sollwegsstrecke die Antriebseinheit in Abhängigkeit von der Position des in Arbeitsrichtung hinteren Referenzpunktes gesteuert wird, so dass sich der hintere Referenzpunkt auf der Sollwegstrecke oder in einem vorgegebenen Abstand entlang der Sollwegstrecke bewegt.

15. Verfahren nach Anspruch 14, **dadurch gekennzeichnet, dass** in dem ersten Steuermodus in Abhängigkeit von der Abweichung des vorderen Referenzpunktes von der Sollwegstrecke und der Abweichung von dem hinteren Referenzpunkt von der Sollwegstrecke die Stellung der vorderen Räder oder Laufwerke und der hinteren Räder oder Laufwerke verändert wird und in dem zweiten Steuermodus in Abhängigkeit von der Abweichung des hinteren Referenzpunktes von der Sollwegstrecke die Stellung der vorderen Räder oder Laufwerke verändert wird.

## Claims

1. Self-propelled civil engineering machine, and in particular a slipform paver,
having a chassis (3),
having a working unit (6) which is arranged on the chassis of the machine and which has work-doing means for producing structures on a piece of ground or for changing the piece of ground,
having a drive unit (16) to enable the civil engineering machine to perform translatory and/or rotational movements on the ground, and
having a control and calculating unit (23) which comprises
means for determining the deviation from a desired distance or path of travel (20) of at least one reference point (25) on the civil engineering machine, the desired distance or path of travel being defined by at least one straight line and/or at least one curve, and
means for controlling the drive unit as function of the deviation from the desired distance or path of travel (20) of the at least one reference point (25) on the civil engineering machine, the reference point thus moving along the desired distance or path of travel or along the desired distance or path of travel at a preset spacing therefrom,
**characterised in that**
the control and calculating unit (23) is so designed that, as the civil engineering machine moves, the position of the at least one reference point (25) is shifted through the control and calculating unit (23) as a function of the line followed by the desired distance or path of travel (20) in a co-ordinate system (x, y) referred to the civil engineering machine,
the control and calculating unit (23) being so designed that, before the transition from a substantially straight section (20A) of the desired distance or path of travel (20) to a curved section (20B) of the desired distance or path of travel, the position of the at least one reference point (25) can be shifted from a position which is at the front in the direction of operation to a position which is at the rear in the direction of operation, and/or
the control and calculating unit (23) being so designed that, after the transition from a substantially straight section (20A) of the desired distance or path of travel to a curved section (20B) of the desired distance or path of travel, the position of the at least one reference point (25) can be shifted from a position which is at the rear in the direction of operation to a position which is at the front in the direction of operation.

2. Civil engineering machine according to claim 1, **characterised in that** the control and calculating unit (23) comprises means for determining the deviation from a desired distance or path of travel (20) of a reference point (25) on the civil engineering machine which is at the front in the direction of operation and of a reference point (26) thereon which is at the rear in the direction of operation, the control and calculating unit (23) being so designed that, in a first mode of control, the drive unit is controlled as a function of the deviation of the reference points at the front and rear in the direction of operation when the civil engineering machine is moving along a substantially straight section (20A, 20B) of the desired distance or path of travel, the front and rear reference points thus moving along the desired distance or path of travel or along the desired distance or path of travel at a spacing therefrom.

3. Civil engineering machine according to claim 2, **characterised in that** the control and calculating unit (23) is so designed that the reference point (25) which is at the front in the direction of operation can be shifted from a position which is at the front in the direction of operation to a position which is at the rear in the direction of operation before the transition from a substantially straight section of the desired distance or path of travel to a curved section of the desired distance or path of travel.

4. Civil engineering machine according to claim 2 or 3, **characterised in that** the control and calculating unit (23) is so designed that, after the transition from a substantially straight section of the desired distance or path of travel to a curved section of the desired distance or path of travel, the reference point (25) which is at the front in the direction of operation can be shifted from a position which is at the rear in the direction of operation to a position which is at the front in the direction of operation.

5. Civil engineering machine according to one of claims 1 to 4, **characterised in that** the control and calculating unit (23) comprises means for determining the deviation from a desired distance or path of travel (20) of a reference point (25) on the civil engineering machine which is at the front in the direction of operation and of a reference point (26) thereon which is at the rear in the direction of operation, the control and calculating unit (23) being so designed that, in a second mode of control, the drive unit is controlled as a function of the position of the reference point (26) which is at the rear in the direction of operation when the civil engineering machine is moving along a curved section (20B) of the desired distance or path of travel, the rear reference point thus moving along the desired distance or path of travel or along the desired distance or path of travel at a preset spacing therefrom.

6. Civil engineering machine according to one of claims 2 to 5, **characterised in that** the drive unit (16) to enable the civil engineering machine to perform translatory and/or rotational movements on the ground has front wheels or running-gear units (17A) and rear wheels or running-gear units (17B) and a steering arrangement (18) for steering the front wheels or running-gear units and/or the rear wheels or running-gear units, the control and calculating unit (23) being so designed that, in the first mode of control, the position of the front wheels or running-gear units (17A) and of the rear wheels or running-gear units (17B) can be varied as a function of the deviation of the front reference point (25) from the desired distance or path of travel (20) and of the deviation of the rear reference point (26) from the desired distance or path of travel (20) and, in the second mode of control, the position of the front wheels or running-gear units (17A) can be varied as a function of the deviation of the rear reference point (26) from the desired distance or path of travel (20).

7. Civil engineering machine according to one of claims 1 to 6, **characterised in that** the control and calculating unit (23) comprises means for determining data defining the line followed by the desired distance or path of travel, the control and calculating unit (23) being so designed that a first control signal is generated when the reference point (26) which is at the front in the direction of operation is in the region of the transition between a substantially straight section (20A) and a curved section (20B), the front reference point (25) thus being able to be shifted from a position which is at the front in the direction of operation to a position which is at the rear in the direction of operation.

8. Civil engineering machine according to one of claims 1 to 6, **characterised in that** the control and calculating unit (23) comprises means for determining data defining the line followed by the desired distance or path of travel, the control and calculating unit (23) being so designed that a second control signal is generated when the reference point (25) which is at the rear in the direction of operation is in the region of the transition between a substantially straight section and a curved section, the front reference point (25) thus being able to be shifted from a position which is at the rear in the direction of operation to a position which is at the front in the direction of operation.

9. Civil engineering machine according to one of claims 1 to 8, **characterised in that** the control and calculating unit comprises a global navigation satellite system (GNSS) (24) and a programmable logic control (PLC) system for the machine.

10. Method of controlling a drive unit of a self-propelled civil engineering machine, and in particular a slipform paver, to enable the civil engineering machine to perform translatory and/or rotational movements on the ground, in which the deviation of at least one reference point on the civil engineering machine from a desired distance or path of travel which is defined by at least one straight line and/or curve is determined,
the drive unit being controlled as function of the deviation of the at least one reference point on the civil engineering machine from the desired distance or path of travel in such a way that the reference point on the civil engineering machine moves along the desired distance or path of travel or along the desired distance or path of travel at a preset spacing therefrom,
**characterised in that**
the position of the at least one reference point is shifted as a function of the line followed by the desired distance or path of travel in a co-ordinate system referred to the civil engineering machine,
before the transition from a substantially straight section of the desired distance or path of travel to a curved section of the desired distance or path of travel, the position of the at least one reference point being shifted from a position which is at the front in the direction of operation to a position which is at the rear in the direction of operation, and/or
after the transition from a substantially straight section of the desired distance or path of travel to a curved section of the desired distance or path of travel, the position of the at least one reference point being shifted from a position which is at the rear in the direction of operation to a position which is at the front in the direction of operation.

11. Method according to claim 10, **characterised in that** the deviation from a desired distance or path of travel of a reference point on the civil engineering machine which is at the front in the direction of operation and of a reference point thereon which is at the rear in the direction of operation is determined, the drive unit being controlled, in a first mode of control, as a function of the deviation of the reference points at the front and rear in the direction of operation when the civil engineering machine is moving along a substantially straight section of the desired distance or path of travel, the front and rear reference points thus moving along the desired distance or path of travel or along the desired distance or path of travel at a spacing therefrom.

12. Method according to claim 11, **characterised in that** the reference point which is at the front in the direction of operation is shifted from a position which is at the front in the direction of operation to a position which is at the rear in the direction of operation before the transition from a substantially straight section of the desired distance or path of travel to a curved section of the desired distance or path of travel.

13. Method according to claim 11 or 12, **characterised in that**, after the transition from a substantially straight section of the desired distance or path of travel to a curved section of the desired distance or path of travel, the reference point which is at the front in the direction of operation is shifted from a position which is at the rear in the direction of operation to a position which is at the front in the direction of operation.

14. Method according to one of claims 10 to 13, **characterised in that** the deviation from a desired distance or path of travel of a reference point on the civil engineering machine which is at the front in the direction of operation and of a reference point thereon which is at the rear in the direction of operation is determined, the drive unit being controlled, in a second mode of control, as a function of the position of the reference point which is at the rear in the direction of operation when the civil engineering machine is moving along a curved section of the desired distance or path of travel, the rear reference point thus moving along the desired distance or path of travel or along the desired distance or path of travel at a spacing therefrom.

15. Method according to claim 14, **characterised in that**, in the first mode of control, the position of the front wheels or running-gear units and of the rear wheels or running-gear units drive unit is varied as a function of the deviation of the front reference point from the desired distance or path of travel and of the deviation of the rear reference point from the desired distance or path of travel and, in the second mode of control, the position of the front wheels or running-gear units is varied as a function of the deviation of the rear reference point from the desired distance or path of travel.

## Revendications

1. Machine de construction automotrice, en particulier finisseur à coffrage glissant, avec un cadre de machine (3),
une unité de travail (6) disposée au niveau du cadre de machine, avec des moyens de travail servant à installer des corps de construction sur un terrain ou servant à modifier le terrain,
une unité d'entraînement (16) servant à exécuter des déplacements par translation et/ou par rotation de la machine de construction sur le terrain, et
une unité de commande et de calcul (23), qui présente :
des moyens servant à déterminer l'écart d'au moins un point de référence (25) de la machine de construction par rapport à un parcours théorique (20), le parcours théorique étant décrit par au moins une droite et/ou au moins une courbe,
et
des moyens servant à commander l'unité d'entraînement en fonction de l'écart de l'au moins un point de référence (25) de la machine de construction par rapport au parcours théorique (20) de sorte que le point de référence se déplace sur le parcours théorique ou à une distance prédéfinie le long du parcours théorique,
**caractérisée en ce que**
l'unité de commande et de calcul (23) est réalisée de telle manière que la position de l'au moins un point de référence (25) est décalée lors du déplacement de la machine de construction en fonction du tracé du parcours théorique (20) dans un système de coordonnées (x, y) se rapportant à la machine de construction par l'unité de commande et de calcul (23), dans laquelle
l'unité de commande et de calcul (23) est réalisée de telle manière que la position de l'au moins un point de référence (25) peut être décalée avant le passage d'une section sensiblement rectiligne (20A) du parcours théorique (20) à une section incurvée (20B) du parcours théorique, depuis une position avant dans la direction de travail à une position arrière dans la direction de travail,
et/ou
l'unité de commande et de calcul (23) est réalisée de telle manière que la position de l'au moins un point de référence (25) peut être décalée après le passage depuis une section sensiblement rectiligne (20A) du parcours théorique à une section incurvée (20B) du parcours théorique, depuis une position arrière dans la direction de travail à une position avant dans la direction de travail.

2. Machine de construction selon la revendication 1, **caractérisée en ce que** l'unité de commande et de calcul (23) présente des moyens servant à déterminer l'écart d'un point de référence avant (25) dans la direction de travail et d'un point de référence arrière (26) dans la direction de travail de la machine de construction par rapport à un parcours théorique (20), dans laquelle l'unité de commande et de calcul (23) est réalisée de telle manière que dans un premier mode de commande, lors d'un déplacement de la machine de construction sur une section sensiblement rectiligne (20A, 20B) du parcours théorique, l'unité d'entraînement est commandée en fonction de l'écart des points de référence avant et arrière dans la direction de travail de sorte que les points de référence avant et arrière se déplacent sur le parcours théorique ou selon une distance prédéfinie le long du parcours.

3. Machine de construction selon la revendication 2, **caractérisée en ce que** l'unité de commande et de calcul (23) est réalisée de telle manière que le point de référence avant (25) dans la direction de travail peut être décalé avant le passage d'une section sensiblement rectiligne du parcours théorique à une section incurvée du parcours théorique, depuis une position avant dans la direction de travail à une position arrière dans la direction de travail.

4. Machine de construction selon la revendication 2 ou 3, **caractérisée en ce que** l'unité de commande et de calcul (23) est réalisée de telle manière que le point de référence avant (25) dans la direction de travail peut être décalé après le passage d'une section sensiblement rectiligne du parcours théorique à une section incurvée du parcours théorique, depuis une position arrière dans la direction de travail à une position avant dans la direction de travail.

5. Machine de construction selon l'une quelconque des revendications 1 à 4, **caractérisée en ce que** l'unité de commande et de calcul (23) présente des moyens servant à déterminer l'écart d'un point de référence avant (25) dans la direction de travail et d'un point de référence arrière (26) dans la direction de travail de la machine de construction par rapport à un parcours théorique (20), dans laquelle l'unité de commande et de calcul (23) est réalisée de telle manière que dans un deuxième mode de commande, lors d'un déplacement de la machine de construction sur une section incurvée (20B) du parcours théorique, l'unité d'entraînement est commandée en fonction de la position du point de référence arrière (26) dans la direction de travail de sorte que le point de référence arrière se déplace sur le parcours théorique ou selon une distance prédéfinie le long du parcours théorique.

6. Machine de construction selon l'une quelconque des revendications 2 à 5, **caractérisée en ce que** l'unité d'entraînement (16) présente, pour exécuter des déplacements par translation et/ou par rotation de la machine de construction sur le terrain, des roues ou des trains de roulement avant (17A) et des roues ou des trains de roulement arrière (17B) ainsi qu'un dispositif de direction (18) servant à diriger les roues ou trains de roulement avant et/ou les roues ou trains de roulement arrière, dans laquelle l'unité de commande et de calcul (23) est réalisée de telle manière que dans le premier mode de commande, en fonction de l'écart du point de référence avant (25) par rapport au parcours théorique (20) et de l'écart du point de référence arrière (26) par rapport au parcours théorique (20), la position des roues ou trains de roulement avant (17A) et des roues ou trains de roulement arrière (17B) peut être modifiée et dans le deuxième mode de commande, en fonction de l'écart du point de référence arrière (26) par rapport au parcours théorique (20), la position des roues ou trains de roulement avant (17A) peut être modifiée.

7. Machine de construction selon l'une quelconque des revendications 1 à 6, **caractérisée en ce que** l'unité de commande et de calcul (23) présente des moyens servant à déterminer des données décrivant le tracé du parcours théorique, dans laquelle l'unité de commande et de calcul (23) est réalisée de telle manière qu'un premier signal de commande est généré quand le point de référence avant (26) dans la direction de travail se trouve dans la zone du passage entre une section sensiblement rectiligne (20A) et une section incurvée (20B) de sorte que le point de référence avant (25) peut être décalé d'une position avant dans la direction de travail à une position arrière dans la direction de travail.

8. Machine de construction selon l'une quelconque des revendications 1 à 6, **caractérisée en ce que** l'unité de commande et de calcul (23) présente des moyens servant à déterminer des données décrivant le tracé du parcours théorique, dans laquelle l'unité de commande et de calcul (23) est réalisée de telle manière qu'un deuxième signal de commande est généré quand le point de référence arrière (25) dans la direction de travail se trouve dans la zone du passage entre une section sensiblement rectiligne et une section incurvée de sorte que le point de référence avant (25) peut être décalé d'une position arrière dans la direction de travail à une position avant dans la direction de travail.

9. Machine de construction selon l'une quelconque des revendications 1 à 8, **caractérisée en ce que** l'unité de commande et de calcul comprend un système global de navigation par satellites (GNSS) servant à définir la position (24) et une commande de machine à mémoire programmable (SPS).

10. Procédé servant à commander une unité d'entraînement d'une machine de construction automotrice, en particulier d'un finisseur à coffrage glissant, servant à exécuter des déplacements par translation et/ou par rotation de la machine de construction sur le terrain, où l'écart d'au moins un point de référence de la machine de construction par rapport à un parcours théorique, qui est décrit par au moins une droite et/ou une courbe, est déterminé, dans lequel l'unité d'entraînement est commandée en fonction de l'écart de l'au moins un point de référence de la machine de construction par rapport au parcours théorique de telle manière que le point de référence de la machine de construction se déplace sur le parcours théorique ou à une distance prédéfinie le long du parcours théorique,
**caractérisé en ce que**
la position de l'au moins un point de référence est décalée en fonction du tracé du parcours théorique dans un système de coordonnées se rapportant à la machine de construction, dans lequel
la position de l'au moins un point de référence est décalée avant le passage d'une section sensiblement rectiligne du parcours théorique à une section incurvée du parcours théorique, depuis une position avant dans la direction de travail à une position arrière dans la direction de travail, et/ou
la position de l'au moins un point de référence est décalée après le passage depuis une section sensiblement rectiligne du parcours théorique à une section incurvée du parcours théorique, depuis une position arrière dans la direction de travail à une position avant dans la direction de travail.

11. Procédé selon la revendication 10, **caractérisé en ce que** l'écart d'un point de référence avant dans une direction de travail et d'un point de référence arrière dans une direction de travail de la machine de construction par rapport à un parcours théorique est déterminé, dans lequel dans un premier mode de commande, lors d'un déplacement de la machine de construction sur une section sensiblement rectiligne du parcours théorique, l'unité d'entraînement est commandée en fonction de l'écart des points de référence avant et arrière dans la direction de travail de sorte que les points de référence avant et arrière se déplacent sur le parcours théorique ou selon une distance prédéfinie le long du parcours théorique.

12. Procédé selon la revendication 11, **caractérisé en ce que** le point de référence avant dans la direction de travail est décalé avant le passage d'une section sensiblement rectiligne du parcours théorique à une section incurvée du parcours théorique, depuis une position avant dans la direction de travail à une position arrière dans la direction de travail.

13. Procédé selon la revendication 11 ou 12, **caractérisé en ce que** le point de référence avant dans la direction de travail est décalé après le passage d'une section sensiblement rectiligne du parcours théorique à une section incurvée du parcours théorique, depuis une position arrière dans la direction de travail à une position avant dans la direction de travail.

14. Procédé selon l'une quelconque des revendications 10 à 13, **caractérisé en ce que** l'écart d'un point de référence avant dans la direction de travail et d'un point de référence arrière dans la direction de travail de la machine de construction par rapport à un parcours théorique est déterminé, dans lequel dans un deuxième mode de commande, lors d'un déplacement de la machine de construction sur une section incurvée du parcours théorique, l'unité d'entraînement est commandée en fonction de la position du point de référence arrière dans la direction de travail de sorte que le point de référence arrière se déplace sur le parcours théorique ou selon une distance prédéfinie le long du parcours théorique.

15. Procédé selon la revendication 14, **caractérisé en ce que** dans le premier mode de commande, en fonction de l'écart du point de référence avant par rapport au parcours théorique et de l'écart du point de référence arrière par rapport au parcours théorique, la position des roues ou trains de roulement avant et des roues ou trains de roulement arrière est modifiée et dans le deuxième mode de commande, en fonction de l'écart du point de référence arrière par rapport au parcours théorique, la position des roues ou trains de roulement avant est modifiée.
